# EUROPÄISCHE PATENTANMELDUNG

(11) **EP 1 278 122 A2**
(43) Veröffentlichungstag der Anmeldung: **22.01.2003**
(21) Anmeldenummer: 02014139.6
(22) Anmeldetag: 25.06.2002
(51) Int. Cl.: G06F 9/44

(54) **Verfahren zur Erzeugung pixelorientierter Bilddateien zur Darstellung graphischer Symbole durch eine numerische Steuerung**

(30) Priorität: 18.07.2001 DE 10134270
(71) Anmelder: Dr. Johannes Heidenhain GmbH, 83292 Traunreut (DE)
(72) Erfinder: Dufter, Alfred, 83334 Inzell (DE)

(57) **Zusammenfassung**

Um die pixelorientierten Bilddateien (10) zur Anzeige von graphischen Symbolen (3) einer numerischen Steuerung (1) zu erzeugen und mit wenig Aufwand an veränderte Bedingungen anpassen zu können, wird vorgeschlagen, Bildbeschreibungsdateien (5) mit Informationen über Elemente (6) und Texte (15) der graphischen Symbole zusammen mit Textdateien (13) und Anwenderdateien (7) in einem ersten Speicherbereich (2) abzulegen. In einer Verarbeitungseinheit (8) werden daraus pixelorientierte Bilddateien (10) erzeugt, die den in der Anwenderdateien (7) festgelegten Vorgaben hinsichtlich Bildschirmauflösung, Farben und anderer Parameter entsprechen. Der Anwender einer solchen numerischen Steuerung (1) kann die graphischen Symbole (3) in einfacher Weise seinen Bedürfnissen anpassen.

## Beschreibung

Die Erfindung betrifft ein Verfahren zum Erzeugen pixelorientierter Bilddateien zur Darstellung graphischer Symbole durch eine numerische Steuerung nach Anspruch 1.

Eine moderne numerische Steuerung zeigt auf einem Bildschirm graphische Symbole (Icons) an, die es dem Benutzer einer durch die numerische Steuerung kontrollierten Werkzeugmaschine erlaubt, Befehle über situationsabhängig belegte Funktionstasten (Softkeys) komfortabel einzugeben, beziehungsweise Informationen über den Maschinenzustand oder Hilfestellung zur momentanen Situation in graphischer und damit schnell verständlicher Form entgegen zu nehmen. Die graphischen Symbole bestehen dabei aus zwei- oder dreidimensionalen Objekten, die evtl. durch kurze Texte ergänzt sind, oder auch nur aus Text.

Da solche numerischen Steuerungen in unterschiedlichen Ländern zum Einsatz kommen, müssen die Texte der graphischen Symbole der jeweiligen Landessprache angepaßt werden. Da außerdem bei den Benutzern unterschiedlichste Anzeigegeräte (Bildschirme) zum Einsatz kommen, müssen die graphischen Symbole in verschiedensten Auflösungen zur Verfügung gestellt werden, um auf dem jeweiligen Anzeigegerät eine gute Erkennbarkeit zu gewährleisten.

Die graphischen Symbole werden in einem Datenspeicher der numerischen Steuerung pixelorientiert, also Bildpunkt für Bildpunkt gespeichert. Zur Erstellung der graphischen Symbole kommt ein Bildeditor zum Einsatz, der ebenfalls pixelorientiert arbeitet. Bei der Vielzahl von möglichen Kombinationen aus Sprachen und Bildschirmauflösungen ist der Aufwand zur Erstellung aller benötigten graphischen Symbole groß, da ein einziger Satz an graphischen Symbolen schon mehrere hundert verschiedene Elemente aufweisen kann.

Ändern sich beim Anwender die Bedingungen, etwa durch ein neues Anzeigegerät mit höherer Auflösung, muß vom Hersteller der Steuerung erst aufwendig ein neuer Satz graphischer Symbole hergestellt, geliefert und installiert werden. Dies schränkt die Flexibilität solcher Steuerungen erheblich ein. Die bloße Umrechnung der vorhanden pixelorientiert gespeicherten Bilder in eine neue Bildschirmauflösung würde zu unsauberen Kanten in den graphischen Symbolen führen.

Um von der jeweiligen Auflösung des Anzeigegerätes unabhängig zu werden, ist es bekannt, graphische Symbole in vektororientierter Form zu speichern. Der Aufwand zur Darstellung solcher Vektorgraphiken steigt jedoch mit der Komplexität des darzustellenden Objektes an und belastet so den Prozessor der numerischen Steuerung mehr als die Darstellung pixelorientierter Graphiken, insbesondere wenn dreidimensionale Bilder zum Einsatz kommen sollen.

In der US 5689286 wird ein System vorgeschlagen, das die Modifikation einzelner Icons anhand von vorgegeben Bibliotheken erlaubt. Einzelne Teile der Icons können in definierter Weise verändert und das Icon anschließend wieder als pixelorientierte Graphikdatei in einem Speicher abgelegt werden.

Das System erlaubt jedoch nicht, einen ganzen Satz von graphischen Symbolen in seinen Eigenschaften zu verändern.

Aufgabe der Erfindung ist es, ein Verfahren anzugeben, das es dem Anwender einer numerischen Steuerung in einfacher Weise erlaubt, einen anwenderspezifischen Satz von graphischen Symbolen zur Darstellung auf einem Bildschirm zu erstellen.

Diese Aufgabe wird gelöst durch ein Verfahren nach Anspruch 1. Vorteilhafte Details des Verfahrens ergeben sich aus den von Anspruch 1 abhängigen Ansprüchen.

Es wird vorgeschlagen, in einer numerischen Steuerung Bildbeschreibungsdateien und Textdateien sowie zusätzlich Anwenderdateien zu speichern. In einer Verarbeitungseinheit werden daraus die gewünschten graphischen Symbole in Form von pixelorientierten Bilddateien erzeugt. Soll nun beispielsweise die Auflösung der graphischen Symbole zur Anzeige auf einem neuen Bildschirm geändert werden, genügt es, den entsprechenden Parameter in der Anwenderdatei zu ändern. Der neue Satz graphischer Symbole wird dann in der Verarbeitungseinheit automatisch erstellt. Der Aufwand zur Erstellung eines Satzes graphischer Symbole in einer neuen Sprache beschränkt sich auf das Erstellen einer Textdatei mit den zur Anzeige vorgesehenen Texten in der gewünschten Sprache.

Weitere Vorteile sowie Einzelheiten der vorliegenden Erfindung ergeben sich aus der nachfolgenden Beschreibung des Verfahrens anhand der Figuren. Es zeigt
- Figur 1: ein Blockschaltbild einer numerischen Steuerung,
- Figur 2: ein Verfahren zur Erzeugung von Bilddateien.

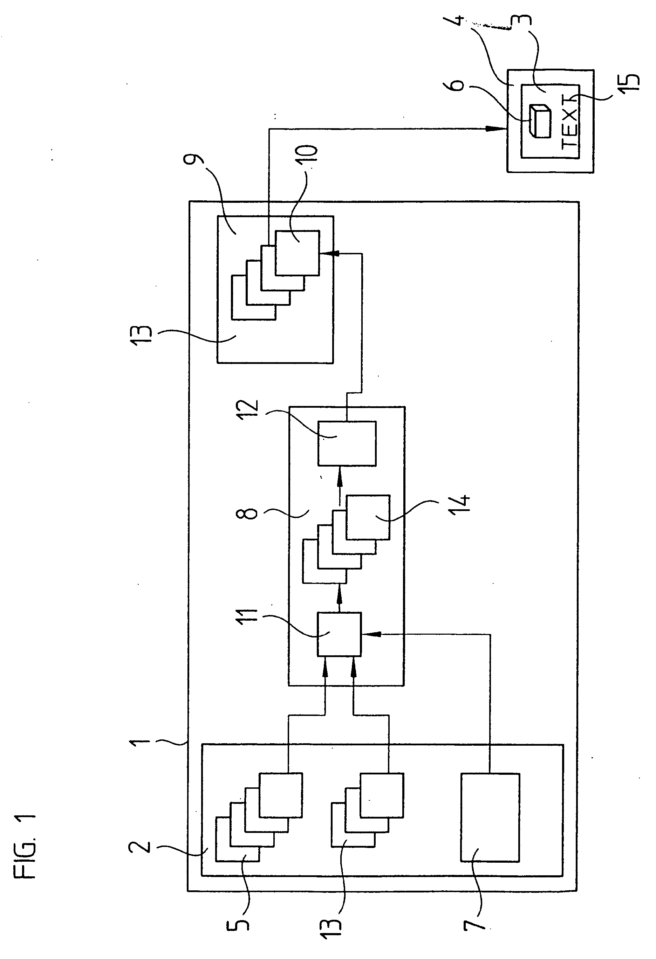

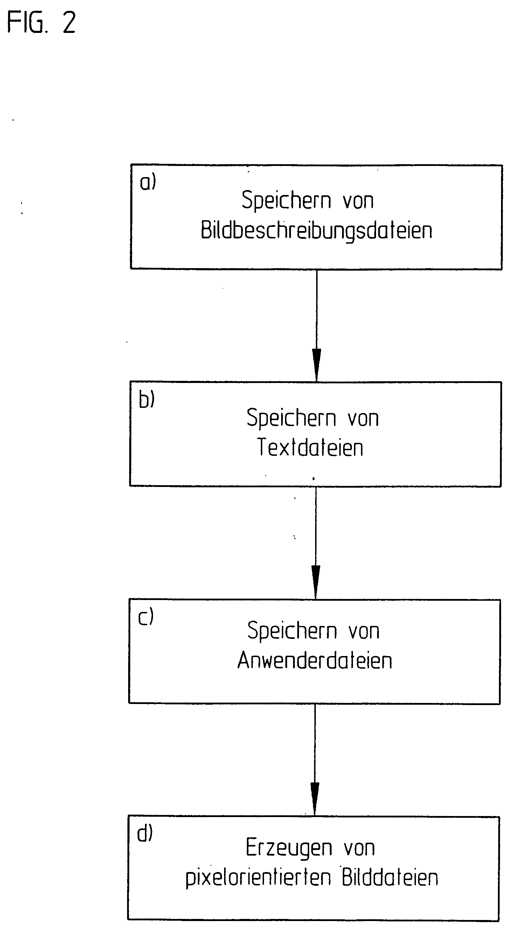

Es soll anhand der Schritte a) - d) der Figur 2 das Verfahren erläutert werden, mit dem anwenderspezifische graphische Symbole zur Darstellung auf einem Bildschirm einer numerischen Steuerung erzeugt werden können. Die dazu nötigen Einrichtungen der numerischen Steuerung sind in Figur 1 gezeigt.

In Figur 1 erkennt man einen ersten Speicherbereich 2 einer numerischen Steuerung 1. In diesen ersten Speicherbereich 2 werden vom Hersteller der numerischen Steuerung verschiedene Daten abgelegt.

In einem Schritt a) ist für jedes graphische Symbol 3, das auf einem Bildschirm 4 angezeigt werden soll, eine Bildbeschreibungsdatei 5 zu speichern. Diese Bildbeschreibungsdatei 5 enthält dabei die Information über den geometrischen Aufbau und damit die Form der darzustellenden Elemente 6, wie dem Würfel im graphischen Symbol 3 in Figur 1. Hierfür existieren bereits Beschreibungssprachen, die auch komplexe zweidimensionale oder dreidimensionale Elemente 6 darstellen können. Zur Erstellung dieser Bildbeschreibungsdateien 5 stehen Editoren zur Verfügung.

Für jedes Element 6 kann außerdem ein Material festgelegt werden. Beispielsweise kann dem Würfel des graphischen Symbols 3 das Material "Werkstück", "Werkzeug 1" oder "Werkzeug 2" zugeordnet werden. Für graphische Symbole 3, die einen Text 15 aufweisen sollen, wird der Text 15 entweder bereits in der Bildbeschreibungsdatei 5 festgelegt (sprachenunabhängig), oder über Textvariablen eingefügt (sprachenabhängig). Diese Textvariablen dienen später dazu, Texte 15 in Abhängigkeit der gewünschten Sprache darzustellen. Für die Texte 15 wird außerdem deren Erscheinungsbild wie Ausrichtung oder Schriftgröße in der Bildbeschreibungsdatei 5 bestimmt. Es kann vorgesehen werden, Eigenschaften wie die Schriftfarbe und Schriftart über Materialien festzulegen, deren konkretes Aussehen ebenso wie das der Materialien der Elemente 6 erst später definiert wird.

Da es wie erwähnt Hunderte von graphischen Symbolen 3 in einer modernen numerischen Steuerung 1 geben kann, entseht ein ganzer Satz von Bildbeschreibungsdateien 5.

In einem Schritt b) wird im ersten Speicherbereich 2 für jede gewünschte Sprache je eine Textdatei 13 gespeichert. Dadurch entsteht ein Satz von Textdateien 13. In jeder der Textdateien 13 werden den in den Bildbeschreibungsdateien 5 verwendeten Textvariablen konkrete sprachenabhängige Texte 15 zugewiesen. Sollen später graphische Symbole 3 mit Texten 15 in einer neuen Sprache zum Einsatz kommen, muß dazu lediglich eine weitere Textdatei 13 in der entsprechenden Sprache zur Verfügung gestellt werden.

In wenigstens einer Anwenderdatei 7 werden schließlich in einem Schritt c) anwenderspezifische Informationen gespeichert. So können hier das Aussehen der in den Bildbeschreibungsdateien 5 verwendeten Materialien für die Elemente (6) und Texte (15) zentral festgelegt und konkrete Eigenschaften vergeben werden. Farbe "Grün" oder Reflexionsgrad "10%" sind Beispiele für solche konkrete Eigenschaften der Materialien. Über einen Parameter "Farbe" für den Hintergrund der graphischen Symbole 3 kann der Anwender der numerischen Steuerung beispielsweise das Aussehen des Bildschirms 4 an seine Firmenfarben anpassen.

Auf diese Weise läßt sich also über die Materialparameter das Aussehen der graphischen Symbole 3 mit den Elementen 6 und Texten 15 festlegen. Zur Änderung des Aussehens aller graphischen Symbole genügt es, einzelne Materialparameter zu verändern.

Weitere Eigenschaften, die vom Anwender beeinflußt werden können, sind etwa Beleuchtungsrichtung, Schattenwurf und Blickwinkel für dreidimensionale Elemente 6. Ein besonders wichtiger Parameter, der in der Anwenderdatei 7 festgelegt werden muß, ist die Auflösung des angeschlossenen Bildschirms 4. Nur so können später graphische Symbole 3 erzeugt werden, die optimal an den jeweiligen Bildschirm angepaßt sind. Es kann vorteilhaft sein, mehrere verschiedene Bildschirmauflösungen vorzugeben, wenn etwa häufig zwischen verschiedenen Bildschirmen 4 gewechselt werden soll.

In den Schritten a), b) und c) legt der Anwender der numerischen Steuerung 1 alle Vorgaben für den Satz von graphischen Symbolen 3 fest. Diese drei Schritte können dabei in beliebiger Reihenfolge und mit beliebigem zeitlichen Abstand abgearbeitet werden, es müssen lediglich alle Informationen aus Bildbeschreibungsdateien 5, Textdateien 13 und Anwenderdateien 7 vor dem nächsten Schritt d) zur Verfügung stehen.

In diesem Schritt d) bearbeitet eine Verarbeitungseinheit 8 die Daten aus dem ersten Speicherbereich 2 und erzeugt einen Satz pixelorientierter Bilddateien 10, die zur schnellen Ausgabe auf den Bildschirm 4 geeignet sind und in einem zweiten Speicherbereich 9 abgelegt werden. Der erste Speicherbereich 2 und zweite Speicherbereich 9 können dabei auch identisch sein.

In der Verarbeitungseinheit 8 kann ein sogenannter Raytracer 12 arbeiten, der aus Bildbeschreibungsdateien 5 pixelorientierte Bilddateien 10 berechnen kann. Um einen konventionellen Raytracer 12 verwenden zu können, müssen die Bildbeschreibungsdateien 5 in der Verarbeitungseinheit 8 zunächst in einem Filter 11 mit den sprachenabhängigen Texten 15 aus den Textdateien 13 verbunden werden. Der Filter 11 berücksichtigt dabei auch die oben beschriebenen Informationen in der Anwenderdatei 7. Es entstehen als Zwischenstufe temporäre Bildbeschreibungsdateien 14, die sowohl die Information über die Elemente 6 als auch über den darzustellenden Text 15 und deren jeweiliges Aussehen enthalten. Für jede vorhandene Textdatei 13 erzeugt der Filter 11 einen kompletten Satz temporäre Bildbeschreibungsdateien 14. Diese temporären Bildbeschreibungsdateien 14 werden dann vom Raytracer 12 in pixelorientierte Bilddateien 10 umgerechnet.

Anstelle des konventionellen Raytracers 12 kann in der Verarbeitungseinheit 8 natürlich ein spezialisierter Raytracer 12 arbeiten, der ohne den Filter 11 die Bildbeschreibungsdateien 5, Textdateien 13 und Anwenderdateien 7 zu pixelorientierten Bilddateien 10 verarbeiten kann.

Liegt nun der fertige Satz pixelorientierter Bilddateien 10 im zweiten Speicherbereich 9, kann von der numerischen Steuerung 1 auf diese Bilddateien 10 zwecks Darstellung von graphischen Symbolen 3 zugegriffen werden. Im zweiten Speicherbereich 9 können dazu auch mehrere Sätze pixelorientierter Bilddateien 10, beispielsweise in verschiedenen Sprachen oder Bildschirmauflösungen, vorgehalten werden.

Werden mehrere Sätze pixelorientierter Bilddateien 10 erzeugt, etwa für verschiedene Sprachen, bietet es sich an, diese in einer komprimierten Form zu speichern, da sich die pixelorientierten Bilddateien 10 jeweils nur im Bereich ihrer sprachenabhängigen Texte unterscheiden.

Soll in der numerischen Steuerung 1 nun beispielsweise eine neue Bildschirmauflösung verwendet werden, so muß lediglich der entsprechende Parameter in der Anwenderdatei 7 gesetzt werden. Die Verarbeitungseinheit 8 erstellt dann aus den bereits existierenden Bildbeschreibungsdateien 5, den Textdateien 13 und den Parametern der Anwenderdatei 7 einen neuen Satz pixelorientierter Bilddateien 10 mit der gewünschten Bildschirmauflösung.

Soll eine neue Sprache zum Einsatz kommen, genügt es, eine entsprechende Textdatei 13 zu installieren. Es werden dann die graphischen Symbole 3 wiederum von der Verarbeitungseinheit 8 automatisch erstellt. Das aufwendige manuelle Bearbeiten jeder einzelnen pixelorientierten Bilddatei 10 wie im Stand der Technik oder der Bildbeschreibungsdateien 5 ist nicht notwendig.

## Patentansprüche

1. Verfahren zum Erzeugen pixelorientierter Bilddateien (10) zur Darstellung graphischer Symbole (3) mit geometrischen Elementen (6) und Texten (15) durch eine numerischen Steuerung (1), bestehend aus folgenden Schritten:
a) Speichern von Bildbeschreibungsdateien (5) für jedes graphische Symbol (3)
b) Speichern von wenigstens einer Textdatei (13)
c) Speichern von anwenderspezifischen Vorgaben in wenigstens einer Anwenderdatei (7)
d) Erzeugen eines Satzes pixelorientierter Bilddateien (10) in einer Verarbeitungseinheit (8), unter Verwendung der Bildbeschreibungsdateien (5), der Textdateien (13) und der wenigstens einen Anwenderdatei (7)

2. Verfahren zum Erzeugen pixelorientierter Bilddateien (10) nach Anspruch 1, wobei in Schritt a) der geometrische Aufbau der Elemente (6) der graphischen Symbole (3) in den Bildbeschreibungsdateien (5) festgelegt wird.

3. Verfahren zum Erzeugen pixelorientierter Bilddateien (10) nach Anspruch 1, wobei in Schritt a) sprachenunabhängige Texte (15) der graphischen Symbole (3) festgelegt werden.

4. Verfahren zum Erzeugen pixelorientierter Bilddateien (10) nach Anspruch 1, wobei in Schritt a) sprachenabhängige Texte (15) der graphischen Symbole (3) über Textvariablen eingefügt werden.

5. Verfahren zum Erzeugen pixelorientierter Bilddateien (10) nach Anspruch 2,3 oder 4, wobei in Schritt a) zusätzlich Materialien der Elemente (6) oder Texte (15) festgelegt werden.

6. Verfahren zum Erzeugen pixelorientierter Bilddateien (10) nach Anspruch 1 oder 4, wobei in Schritt b) für jede Sprache eine Textdatei (13) angelegt wird, die den in den Bildbeschreibungsdateien (5) festgelegten Textvariablen sprachenabhängige Texte (15) zuweist.

7. Verfahren zum Erzeugen pixelorientierter Bilddateien (10) nach Anspruch 1, wobei in Schritt c) wenigstens eine gewünschte Bildschirmauflösung eines zur Anzeige der graphischen Symbole (3) dienenden Bildschirms (4) festgelegt wird.

8. Verfahren zum Erzeugen pixelorientierter Bilddateien (10) nach Anspruch 1 oder 5, wobei in Schritt c) den in den Bildbeschreibungsdateien (5) verwendeten Materialien konkrete Eigenschaften zugewiesen werden.

9. Verfahren zum Erzeugen pixelorientierter Bilddateien (10) nach Anspruch 1, wobei in Schritt d) in einem Filter (11) die Bildbeschreibungsdateien (5) und Textdateien (13) unter Berücksichtigung der Informationen der Anwenderdatei (7) zu temporären Bildbeschreibungsdateien (14) verbunden werden, und ein Raytracer (12) aus den temporären Bildbeschreibungsdateien (14) pixelorientierte Bilddateien (10) erstellt und diese in einem zweiten Speicherbereich (9) ablegt.
